(19) Europäisches Patentamt
European Patent Office
Office européen des brevets

(11) **EP 1 861 450 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **06700533.0**

(22) Anmeldetag: **19.01.2006**

(51) Int Cl.:
*C08G 63/78* (2006.01)   *C08G 63/80* (2006.01)

(86) Internationale Anmeldenummer:
**PCT/CH2006/000043**

(87) Internationale Veröffentlichungsnummer:
**WO 2006/099755 (28.09.2006 Gazette 2006/39)**

(54) **VERFAHREN ZUR HERSTELLUNG EINES POLYESTERS MIT VERBESSERTEN AUFSCHMELZEIGENSCHAFTEN UND KRISTALLISATIONSEIGENSCHAFTEN**

METHOD FOR PRODUCTION OF A POLYESTER WITH IMPROVED MELTING PROPERTIES AND CRYSTALLISATION PROPERTIES

PROCEDE POUR PRODUIRE UN POLYESTER PRESENTANT DES PROPRIETES DE FUSION ET DE CRISTALLISATION AMELIOREES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.03.2005 DE 102005014071**

(43) Veröffentlichungstag der Anmeldung:
**05.12.2007 Patentblatt 2007/49**

(73) Patentinhaber: **Polymetrix AG
9245 Oberbüren (CH)**

(72) Erfinder:
• **CHRISTEL, Andreas
9524 Zuzwil (CH)**
• **CULBERT, Brent, Allan
9500 Wil (CH)**

(74) Vertreter: **Hepp Wenger Ryffel AG
Friedtalweg 5
9500 Wil (CH)**

(56) Entgegenhaltungen:
EP-A- 0 532 988       WO-A-97/21754
WO-A-03/046044       WO-A-2005/090437
US-A1- 2003 069 339

• KARAYANNIDIS G P ET AL: "SOLID-STATE POLYCONDENSATION OF POLY(ETHYLENE TEREPHTHALATE) RECYCLED FROM POSTCONSUMER SOFT-DRINK BOTTLES. I" 20. Dezember 1993 (1993-12-20), JOURNAL OF APPLIED POLYMER SCIENCE, JOHN WILEY AND SONS INC. NEW YORK, US, PAGE(S) 2135-2142 , XP000462219 ISSN: 0021-8995 das ganze Dokument

**Beschreibung**

Die Erfindung bezieht sich auf ein Verfahren zur Herstellung eines Polyesters mit verbesserten Aufschmelzeigenschaften und Kristallisationseigenschaften, wobei zunächst eine Pre-Polyesterschmelze hergestellt wird, diese zu Pre-Polyesterpartikeln geformt und verfestigt wird und in fester Phase in Gegenwart eines Transesterifikationskatalysators thermisch behandelt wird, wobei die Pre-Polyesterpartikel vor der thermischen Behandlung einen Carboxylendgruppengehalt zwischen 25% und 60% aufweisen, und dass während der thermischen Behandlung der Anteil der Veresterungsreaktion an den Polykondensationsreaktionen zwischen 50% und 100% liegt.

Wird eine Reaktion zur Polyesterherstellung in fester Phase so gesteuert, dass die Veresterungsreaktion gegenüber der Transesterifikationsreaktion bevorzugt ist, so hat dies den Vorteil, dass sich auf diesem Weg Polyester mit reduziertem Schmelzpunkt, reduzierter Schmelzenthalphie und somit verbesserten Aufschmelzeigenschaften herstellen lassen. Gleichzeitig ergibt sich ein höherer Kristallisationspunkt, wodurch im Abkühlprozess des Polyesters die Bildung einer Trübung (Haze) vermindert wird. Beides führt insgesamt zu einer Verminderung der benötigten Verarbeitungsenergie.

Die Steuerung der Reaktionen erfolgt dabei hauptsächlich durch geeignete Startbedingungen und wird durch geeignete Prozessbedingungen unterstützt, wobei eine ausreichend hohe Reaktionskinetik erreicht werden muss, um die Wirtschaftlichkeit der Polyesterherstellung zu gewährleisten.

Diese Zusammenhänge sind bisher im Stand der Technik nicht bekannt, da sich Bemühungen zur Optimierung der Festphasenpolykondensation hauptsächlich auf die Optimierung der Reaktionsrate beschränkt haben. US 4205157, Duh beschreibt zum Beispiel ein Verfahren bei dem eine optimale Reaktionsgeschwindigkeit erreicht wird, wenn die Startbedingungen und Prozessbedingungen der Festphasenpolykondensation so gewählt sind, dass die Transesterifikationsreaktion gegenüber der Veresterungsreaktion bevorzugt ist.

Als Ausgangsprodukt wird ein Polyester mit einem Mn von 3000 bis 11500 g/mol und einem Carboxylendgruppengehalt von weniger als 20% verwendet.

Einzig die Steuerung der Reaktionen mittels Zugabe reaktiver Additive ist im Stand der Technik bekannt. Hierbei handelt es sich aber um eine andere Zielsetzung und eine andere Vorgehensweise, die andere Nachteile mit sich bringt. So ist bei der Verwendung von Additiven, die aufgrund eines Polyadditionsmechanismus reagieren, mit wesentlich geringerer Selektivität und somit vermehrt mit unerwünschten Nebenprodukten, wie zum Beispiel Molekülketten mit Verzweigungen, zu rechnen.

Werden kurzkettige Additive verwendet, die aufgrund eines Polykondensationsmechanismus reagieren, so wird der Molekülkettenaufbau als ganzes behindert.

DE 19519898, Mrose et. al. beschreibt zum Beispiel ein Verfahren, bei dem der Molekulargewichtsanstieg im Inneren eines Granulates sich nur wenig vom Molekulargewichtsanstieg im Äusseren eines Granulates unterscheidet, was erreicht wird, indem niedermolekulare Spaltprodukte der Polykondensationsreaktionen dem Prozessgas zugeführt werden. Als Ausgangsprodukt wurde ein Polyester mit relativ geringem Carboxylendgruppengehalt gewählt. Auf diese Weise lässt sich zwar das Verhältnis der Polykondensationsreaktionen steuern. Allerdings ergibt sich dabei zumindest örtlich eine annähernde Gleichgewichtssituation, die sich negativ auf die Entwicklung der Kristallstruktur auswirkt (Unterdrückung der Reaktion bei gleichzeitiger Fortführung der Kristallisation). Durch die teilweise Unterdrückung einer der Polykondensationsreaktionen verlängert sich auch die notwendige Zeit zum Erreichen eines gewünschten Molekulargewichtes.

**Polyester**

Bei Polyestern handelt es sich um kristallisierbare, thermoplastische Polykondensate, wie zum Beispiel Polyethylenterephthalat (PET), Polybutylenterphthalat (PBT) oder Polyethylennaphthalat (PEN) die entweder als Homopolymer oder als Copolymere vorliegen.

Polyester ist ein Polymer das durch Polykondensation aus seinen Monomeren, einer Diol-Komponente und einer Dicarbonsäure-Komponente, gewonnen wird. Verschiedene, meist lineare oder zyklische Diol-Komponenten mit 2 bis 10 C-Atomen kommen zum Einsatz. Ebenso können verschiedene meist aromatische Dicarbonsäure-Komponenten mit üblicherweise 1 bis 3 aromatischen Ringen zum Einsatz kommen. Anstelle der Dicarbonsäure kann auch ihr entsprechender Di-Ester, insbesondere Dimethylester eingesetzt werden.

Polyester werden üblicherweise durch eine Polykondensationsreaktion unter Abspaltung eines niedermolekularen Reaktionsproduktes gewonnen. Dabei kann die Polykondensation direkt zwischen den Monomeren erfolgen oder über eine Zwischenstufe, die anschliessen durch Transesterifikation umgesetzt wird, wobei die Transesterifikation wiederum unter Abspaltung eines niedermolekularen Reaktionsproduktes oder durch Ringöffnungspolymerisation erfolgen kann. Im wesentlichen ist der so gewonnene Polyester linear, wobei eine geringe Anzahl an Verzweigungen entstehen kann.

Bei dem Polyester kann es sich um ein Neumaterial oder um ein Rezyklat handeln.

Dem Polyester können Additive zugegeben werden. Als Additive eignen sich z.B. Katalysatoren, Farbstoffe und Pigmente, UV-Blocker, Verarbeitungshilfsmittel, Stabilisatoren, Schlagzähmodifikatoren, Schäummittel chemischer und physikalischer Art, Füllstoffe wie z.B. Nukleierungsmittel, Barriere- oder mechanische Eigenschaften verbessernde Partikel, verstärkende Körper, wie Kugeln oder Fasern, sowie reaktive Substanzen, wie z.B. Sauerstoffabsorber oder Acetaldehydabsorber.

**Polyethylenterephthalat**

Ein vor allem zur Herstellung von Hohlkörpern, wie zum Beispiel Flaschen, häufig verwendeter Polyester ist Polyethylenterephthalat (PET).

Das Polyethylenterephthalat wird aus seinen Monomeren, einer Diol-Komponente und einer Dicarbonsäure-Komponente, gewonnen. Dabei besteht die Diol-Komponenten mehrheitlich, insbesondere zu mehr als 90 mol-% aus Ethylenglykol (1,2 Ethandiol) und die Dicarbonsäure-Komponenten mehrheitlich, insbesondere zu mehr als 90 mol-% aus Terephthalsäure, wobei der Comonomergehalt insgesamt üblicherweise zwischen 1 und 15 mol% insbesondere zwischen 2 und 10 mol% liegt. Der Comonomergehalt entspricht dabei der Summe des Diol-Comonomergehaltes und des Dicarbonsäure-Comonomergehaltes. Der Diol-Comonomergehalt wird bestimmt als Anzahl mol der Diol-Comonomere bezogen auf die gesamte Anzahl mol der Diole. Der Dicarbonsäure-Comonomergehalt wird bestimmt als Anzahl mol der Dicarbonsäure-Comonomere bezogen auf die gesamte Anzahl mol der Dicarbonsäuren.

Als Comonomere kommen weitere lineare, zyklische oder aromatische Diol- und Dicarbonsäureverbindungen in Frage. Typische Comonomere sind Diethylenglykol (DEG), Isopthalsäure (IPA) oder 1,4-Bis-hydroxymethyl-cyclohexan (CHDM).

**Pre-Polyesterschmelze**

Eine Pre-Polyesterschmelze lässt sich entweder durch Aufschmelzen eines festen Pre-Polyesters oder durch Polymerisation bzw. Polykondensation aus den Polystermonomeren in flüssiger Phase herstellen. Als Pre-Polyesterschmelze kommen Homopolyester, Copolyester wie auch Gemische verschiedener Polyester in Frage, wobei auch rezyklierte Rohstoffe eingesetzt werden können.

Die Flüssigphasenpolymerisation findet üblicherweise bei erhöhter Temperatur statt, wodurch das Prepolymer als Prepolymerschmelze anfällt.

Das Aufschmelzen kann in einem beliebigen Aufschmelzapparat, wie zum Beispiel in einem Extruder, durchgeführt werden, wobei der Polyester dabei auf eine Temperatur über dessen kristallinen Schmelzpunkt erwärmt wird. Zusammen mit dem Aufschmelzen oder darauf folgend, kann eine Verminderung des Molekulargewichts (Depolymerisation) erreicht werden.

Üblicherweise erfolgt die Herstellung der Pre-Polyesterschmelze durch Polkondensation in flüssige Phase in einem kontinuierlichen Prozess, wobei auf eine Veresterungsstufe eine Pre-Polykondensationsstufe folgt. Im konventionellen Polyesterherstellprozess folgt eine Polykondensationsstufe im Hochviskositätsreaktor (auch Finisher genannt). (Vergleiche z.B.: Modern Polyesters, Wiley Series in Polymer Science, Edited by John Scheirs, J. Wiley & Sons Ltd, 2003; Kapitel 4.2). Die Polyesterherstellung kann auch in einem Batch-Prozess erfolgen (Vergleiche z.B.: Modern Polyesters, Wiley Series in Polymer Science, Edited by John Scheirs, J. Wiley & Sons Ltd, 2003; Kapitel 4.1)

Das Molekulargewicht der Pre-Polyesters, insbesondere eines Polyethylenterephthalats, liegt danach bevorzugterweise zwischen 10000 g/mol und 16000 g/mol, insbesondere unter 14000 g/mol.

Alternativ kann die oben erwähnte Polykondensationsstufe im Hochviskositätsreaktor weggelassen werden. Dadurch entsteht ein niedrigviskoser Pre-Polyester mit einem Molekulargewicht, der deutlich unter dem Molekulargewicht des Polyesters nach einer nachfolgenden Festphasenbehandlung liegt.

Das Molekulargewicht des Pre-Polyesters, insbesondere eines Polyethylenterephthalates, liegt danach bevorzugterweise zwischen 2000 und 10000 g/mol, insbesondere über 4000 g/mol, bevorzugterweise über 7000 g/mol.

Das Molekulargewicht bezeichnet dabei das mittlere Molekulargewicht (Zahlenmitte: Mn)

Die Viskosität des Polyesters kann entweder als intrinsische Viskosität (IV) oder als mittleres Molekulargewicht (Zahlenmittel: Mn) angegeben sein. Zur Umrechnung eines IV-Wertes gemessen in Phenol: Dichlormethan = 1: 1 in das mittlere Molekulargewicht wird die Gleichung

$$IV = k^* \ Mn^a$$

verwendet, wobei k=2.1 E-4 und a=0.82 ist.

Diese Gleichung ist allgemein auf publizierte Daten anwendbar, wenn nicht explizit ein anderes Lösemittelgemisch und die dazu gehörenden Umrechnungsfaktoren gegeben sind.

Der IV-Wert gibt dabei die Lösungsviskosität an und wird nach folgender Vorschrift bestimmt:

Zur Messung der Lösungsviskosität wird eine Mischung aus Phenol/Dichlorbenzol (50: 50 Gew.%) als Lösungsmittel benutzt. Die Polyesterprobe wird während 10 Minuten bei 130°C mit einer Konzentration von 0.5% (0.5 g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt.

Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4K_H(R.V. - 1)} - 1}{2 * c * K_H}$$

Mit den obigen Messmethoden (Polymerkonzentration C=0,5.g/dl und der Huggins Konstante $K_H$=0.35) wird die Gleichung:

$$I.V. = \frac{\sqrt{1 + 1.4(R.V. - 1)} - 1}{0.35} \quad (dl/g)$$

Aus dem mittleren Molekulargewicht lässt sich die Endgruppenkonzentration (EGN) berechnen mit der Gleichung

$$EGN = 2E6/Mn,$$

wobei Mn in g/mol eingesetzt wird und EGN in mol/t resultiert.

Mittels der Carboxylendgruppenkonzentration ($c_{COOH}$) und der Endgruppenkonzentration lässt sich der Gehalt der einzelnen Endgruppen berechnen, wobei zur Vereinfachung nur die Präsenz von Hydroxyl- und Carboxylendgruppen berücksichtigt wird, womit EGN = $c_{COOH}$ + $c_{OH}$ wird.

Carboxylendgruppengehalt $X_{COOH}$ = $C_{COOH}$ / EGN;

Hydroxylendgruppengehalt $X_{OH}$ = $c_{OH}$ / EGN = (1-$X_{COOH}$)

Dabei bezeichnet $c_{COOH}$ die Konzentration an Carboxylendgruppen in mol/t und $c_{OH}$ die Konzentration an Hydroxylendgruppen in mol/t.

Erfindungsgemäss werden die Mengen der Diol-Komponenten und der Dicarbonsäure-Komponenten sowie die Bedingungen im Pre-Polyester-Herstellungsprozess so gewählt, dass ein Pre-Polyester mit einem Carboxylendgruppengehalt von 0.25 bis 0.6, insbesondere 0.3 bis 0.55 entsteht, wobei ein Carboxylendgruppengehalt über 0.35 insbesondere über 0.4 bevorzugt ist.

**Granulation**

Das verfestigen und formen der Pre-Polyesterschmelze zu Pre-Polyesterpartikeln kann in einer beliebigen Apparatur erfolgen. Es ist jedoch darauf zu achten, dass die stofflichen Eigenschaften und die Zusammensetzung der Pre-Polyesterschmelze dabei im wesentlich erhalten bleiben oder sich auf den erfindungsgemässen Bereich einstellen.

Üblicherweisen werden Verfahren zur Granulation angewandt.

Bei der Granulation wird die Prepolymerschmelze in eine definierte Form überführt und verfestigt. Dazu wird die Pre-Polyesterschmelze zum Beispiel durch eine Düse mit einer Öffnung (Loch) oder einer Vielzahl von Öffnungen gepresst und geschnitten, vertropft oder versprüht.

Durch Abkühlung wird die Pre-Polyesterschmelze verfestigt. Dies kann mit Hilfe eines flüssigen Kühlmediums (z. B. Wasser, Ethylenglykol) oder gasförmigen Kühlmediums (z. B. Luft, Stickstoff, Wasserdampf) erfolgen, oder durch Kontakt mit einer kalten Oberfläche, wobei auch Kombinationen der Kühlmedien denkbar sind.

Die Abkühlung kann sowohl gleichzeitig, wie auch vor oder nach dem Formen zu Partikeln statt finden.

Die Düsenöffnungen sind üblicherweise rund, können aber auch ein anderes Profil, wie z.B. schlitzförmige Öffnungen darstellen. Es ist darauf zu achten, die Produktflussmenge pro Düsenloch zeitlich und örtlich in einem engen Bereich zu halten, wobei die Standardabweichung der einzelnen Produktflussmengen bevorzugterweise zwischen 0.1 und 10% gehalten werden soll. Um dies zu erreichen, kann je nach Position eines Düsenloches deren Durchmesser oder Länge variiert sein. Gleichzeitig ist auf möglichst gleichmässige Anströmbedingungen (Druck, Geschwindigkeit, Temperatur, Viskosität usw.) der einzelnen Düsenlöcher zu achten.

Ein Schneiden kann sowohl direkt am Düsenaustritt erfolgen oder aber erst nach Durchlaufen einer Behandlungsstrecke.

Liegt eine Pre-Polyesterschmelze mit einem Molekulargewicht von über 7000 g/mol vor, so werden Granulationsprozesse wie Stranggranulation, Wasserringgranulation, Unterwassergranulation oder Kopfgranulation (auch hot face - Granulation) verwendet.

Liegt eine niederviskosere Pre-Polyesterschmelze vor, so werden bevorzugt Granulationsprozesse, wie Vertropfung oder Versprühung, verwendet.

Trotz der Verwendung des Begriffs "Wasser" in der Bezeichnung der Granulationseinrichtungen können auch andere Fluide, Fluidgemische, Flüssigkeiten, Flüssigkeitsgemische oder Flüssigkeiten mit gelösten, emulgierten oder suspendierten Substanzen verwendet werden.

Während die Granulation von Polyestern mit einem Molekulargewicht von über 15000 g/mol in grosstechnischem Massstab angewandt wird, ist die Granulation von niederviskosen Polyesterschmelzen vergleichsweise selten, aber trotzdem bekannt.

Die Verwendung einer Schneidvorrichtung zur Herstellung von niederviskosen Pre-Polyesterpartikeln ist in mehr Detail in PCT/CH2005/000035 beschrieben, das mit in die vorliegende Erfindung eingeschlossen wird.

Die Verwendung einer Vertropfungseinrichtung zur Herstellung von niederviskosen Pre-Polyesterpartikeln ist in mehr Detail in der WO 04/055093 beschrieben, das mit in die vorliegende Erfindung eingeschlossen wird.

Die mittlere Granulatgrösse soll zwischen 0.1 mm und 10mm, bevorzugterweise zwischen 0.5mm und 3mm und insbesondere zwischen 0.85 und 2.5mm liegen. Als mittlere Granulatgrösse gilt der statistische Mittelwert des mittleren Granulatdurchmessers, der sich aus dem Durchschnitt aus Granulathöhe, -länge und -breite ergibt. Die Granulatgrössenverteilung soll in einem engen Spektrum gehalten werden. Bevorzugterweise ist die Standardabweichung der Granulatgewichte von 100 gemessenen Granulaten zwischen 2 und 20%.

Die Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0541 674, Yau vorgeschlagen ist, aufweisen. Unregelmässig körnige Produktform, wie sie aus einem Mahlprozess oder Brechprozess entstehen sind weniger bevorzugt können aber auch verwendet werden.

Bevorzugterweise handelt es sich um massive Granulate, d.h. keine poröse Granulate, wie sie zum Beispiel durch Sinterung, Schäumung und dergleichen gewonnen werden.

Die Abkühlung kann auf eine Temperatur, die unterhalb der Glasübergangstemperatur des Polyesters liegt, erfolgen, was die Lagerung und/oder den Transport der Granulate über einen längeren Zeitraum erlaubt.

Die durchschnittliche Temperatur der Pre-Polyestergranulate kann aber auch auf einem höheren Niveau gehalten werden, um die Energieeffizienz des Prozesses zu verbessern. Dazu ist es möglich, die Temperatur des Kühlmediums anzuheben und/oder die Verweilzeit im Kühlmedium entsprechend kurz zu wählen.

**Festphasen-Polykondensation**

Das Molekulargewicht der Pre-Polyesterpartikel wird durch eine Festphasen-Polykondensation auf einen Wert zwischen 16'000 und 34'000 g/mol, insbesondere auf einen Wert zwischen 20'000 und 28'000 g/mol erhöht. Erfindungsgemäss erfolgt dabei ein Anstieg des Molekulargewichtes um mehr alls 2000 g/mol, insbesondere um mehr als 4000 g/mol.

Die Festphasenpolykondensation umfasst dabei die Schritte der Kristallisation (soweit dies nach der Partikelherstellung noch notwendig ist), des Vorerhitzens, der Nachkondensationsreaktion, der Kühlung sowie die Bereitstellung und Aufbereitung der notwendigen Prozessgase. Dabei können sowohl kontinuierliche als auch Batch-Prozesse zum Einsatz kommen, die zum Beispiel in Apparaturen wie Fliessbett-, Sprudelbett- oder Festbettreaktoren sowie in Reaktoren mit Rührwerkzeugen oder sich selber bewegenden Reaktoren, wie Drehrohrofen oder Taumeltrockner, statt finden. Die Festphasen-Polykondensation kann sowohl bei Normaldruck, bei erhöhtem Druck oder unter Vakuum stattfinden.

Es ist bekannt, zur Erreichung einer möglichst kurzen Nachkondensationszeit möglichst hohe Nachkondensationstemperaturen zu verwenden. Dabei wird jedoch auch die Kristallinität auf ein sehr hohes Niveau angehoben, was wiederum zu hohen Verarbeitungstemperaturen führt. Dies soll durch die Limitierung der Nachkondensationstemperatur verhindert werden. Um ausreichend geringe Verarbeitungstemperaturen zu erhalten, ist es somit zum Beispiel für ein Polyethylenterephthalat von Vorteil, wenn ein wesentlicher Teil der Festphasen-Polykondensation bei einer Temperatur unter 230°C, vorzugsweise unter 220°C erfolgt.

Wird die Nachkondensationstemperatur reduziert, ergeben sich längere Nachkondensationszeiten zur Erreichung des gewünschten Molekulargewichts oder sogar eine asymptotischen Annäherung an ein Molekulargewicht, das noch unterhalb des gewünschten Molekulargewichtes liegt. Dementsprechend ist es somit zum Beispiel für ein Polyethylenterephthalat von Vorteil, wenn ein wesentlicher Teil der Festphasen-Polykondensation bei einer Temperatur über 190°C, vorzugsweise über 200°C erfolgt.

Nach dem Stand der Technik ist bekannt, dass die Reaktionsgeschwindigkeit in der Festphasen-Polykondensation zumindest teilweise diffusionskontrolliert ist und somit mit abnehmender Granulatgrösse zunimmt.

Somit ergibt sich für jede Granulatgrösse ein optimaler Nachkondensationstemperaturbereich bei dem ein gewünschter Molekulargewichtsanstieg in einer wirtschaftlich vertretbaren Nachkondensationszeit, die unter 40 Stunden, idealerweise zwischen 4 und 30 Stunden liegt, erreicht werden kann. Dieser optimale Nachkondensationstemperaturbereich sollte innerhalb des oben beschriebenen Bereichs für die maximale und minimale Temperatur während der Festphasen-Polykondensation liegen.

Es ist ebenso bekannt, dass die Kristallisationsgeschwindigkeit einen maximalen Wert bei einer Temperatur unterhalb der Nachkondensationstemperatur erreicht. Weiterhin ist bekannt, dass die Nachkondensationsrate bei zunehmender Kristallinität abnimmt. Folglich ist es von Vorteil, die zumindest teilkristallinen Polyestergranulate rasch aufzuheizen, um einen möglichst raschen Molekulargewichtsanstieg zu erhalten. Ein entsprechendes Verfahren ist in WO 02/068498 beschrieben, dessen Text ebenfalls in diese Anmeldung eingeschlossen wird.

Dabei kann es von Vorteil sein die Pre-Polyesterpartikel zu Beginn der Festphasen-Polykondensation kurzfristig auf eine Temperatur oberhalb des oben angegebenen optimalen Nachkondensationstemperaturbereiches aufzuheizen. Bei Polyethylenterephthalat kann zum Beispiel ein Aufheizen und kurzfristiges Halten auf eine Temperatur zwischen 220°C und dem kristallinen Schmelzpunkt des Polyethylenterephthalates, vorzugsweise zwischen 230°C und 245°C erfolgen. Die Verweilzeit bei der erhöhten Temperatur soll dabei nicht mehr als 2 Stunden, insbesondere nicht mehr als 30 Minuten betragen.

Im Polyesterherstellungsprozess werden üblicherweise Katalysatoren zugegeben, um die Reaktionsgeschwindigkeit der Polykondensation zu erhöhen. Insbesondere zugegebene Transesterifikationskatalysatoren sind auch während der Festphasen-Polykondensation noch aktiv, wodurch die Transesterifikationsreaktion beschleunigt wird.

Bei den Transesterifikationskatalysatoren handelt es sich um eine oder mehrere Substanzen basierend auf metallischen Elementen, wie zum Beispiel Antimon, Germanium, Aluminium oder Titan. Der Gehalt des metallischen Elementes im Polyester liegt üblicherweise zwischen 5 und 400 ppm, wobei ein Antimongehalt zwischen 20 und 300ppm, ein Germaniumgehalt zwischen 10 und 150ppm, ein Aluminiumgehalt zwischen 10 und 200ppm oder ein Titangehalt zwischen 5 und 20ppm bevorzugt ist.

Eine besondere Ausführung der vorliegenden Erfindung sieht vor, dass dem Polyester ein Veresterungskatalysator, wie zum Beispiel eine metallische Verbindung basierend auf Mangan, Kobalt, Zink oder Kalzium, zur Beschleunigung der Veresterungsreaktion zugegeben wird. In vielen Fällen sollen derartige Substanzen aber explizit ausgeschlossen sein, da durch diese Katalysatoren auch unerwünschte Nebenreaktionen gefördert werden.

Die Erfindung basiert auf der Erkenntnis, dass sich ein Polyester mit verbesserten Aufschmelzeigenschaften und verbesserten Kristallisationseigenschaften herstellen lässt, wenn die Ausgangseigenschaften des Pre-Polyesters und die Prozessbedingungen in der Festphasen-Polykondensation so gewählt werden, dass die Molekulargewichtserhöhung zur Hauptsache über die Veresterungsreaktion erfolgt.

Die verbesserten Aufschmelzeigenschaften werden aus einem vergleichsweise tiefen Schmelzpunkt und einer vergleichsweise tiefen Schmelzenthalpie, gemessen per DSC im ersten Durchgang (1. Run), sichtbar.

Die verbesserten Kristallisationseigenschaften werden aus einem vergleichsweise hohen Kristallisationspunkt, gemessen per DSC im zweiten Durchgang (2. Run), sichtbar. Zur Produktcharakterisierung wird der Polyester nach der Festphasen-Polykondensation verwendet.

Zwei verschiedene Arten von Eigenschaften können mittels einer Differential Scanning Calorimetrie (DSC) -Messung bestimmt werden:

1. Die thermischen Eigenschaften, die sich aufgrund der Behandlung des Produktes ergeben, werden im ersten Durchgang einer DSC-Messung bestimmt. Dabei geben der DSC-Schmelzpunkt und die Schmelzenthalphie Informationen über die Bedingungen und den Energiebedarf, die in einem Aufschmelzprozess erforderlich sind, um den Polyester zu verarbeiten.

2. Die thermischen Eigenschaften, die sich aufgrund der Produktstruktur (chemische Zusammensetzung, Molekulargewicht, Molekulargewichtsverteilung) ergeben, werden im zweiten Durchgang einer DSC-Messung bestimmt. Dabei gibt der DSC-Kristallisationspunkt Informationen über die Bedingungen, die in einem Abkühlprozess zur Kristallisation führen.

Zur Bestimmung der DSC-Schmelzpunkte und der DSC-Kristallisationspunkte erfolgt im ersten Durchgang eine Aufheizung von 10°C/Min auf 310°C. Nach einer Haltezeit von 1 Minute erfolgt eine Abkühlung mit maximaler Abkühlrate. Im zweiten Durchgang erfolgt wiederum eine Aufheizung von 10°C/Min auf 310°C.

Der DSC-Kristallisationspunkt entspricht der Temperatur, bei der der exotherme Kristallisationspeak sein Maximum aufweist.

Der Polyester soll im wesentlichen einen einzelnen Kristallisationspeak aufweisen.

Der DSC-Kristallisationspeak im zweiten Run eines Polyethylenterephthalat Homopolymers soll zum Beispiel über 145°C, insbesondere über 155°C liegen. Für Polyethylenterephthalate mit erhöhtem Comonomeranteil erhöht sich der Kristallisationspunkt entsprechend der im Stand der Technik bekannten Zusammenhänge.

Der DSC-Schmelzpunkt entspricht der Temperatur, bei der der endotherme Schmelzpeak sein Maximum aufweist.

Der Polyester soll im wesentlichen einen einzelnen Schmelzpeak aufweisen, wobei bei einem Polyester mit einem Doppelpeak oder Seitenpeak (auch als Schulter oder verdeckte Schulter benannt), der mehr als 5% der Höhe des Hauptpeaks erreicht, der Peak bei der höheren Temperatur berücksichtigt wird. Eine Schulter oder verdeckte Schulter wird ersichtlich durch eine zusätzliche deutliche Stufe oder ein zusätzliches Maximum in der ersten Ableitung des Schmelzpeaks.

Der DSC-Schmelzpeak im ersten Run eines Polyethylenterephthalat Homopolymers soll zum Beispiel unter 260°C, insbesondere unter 255°C liegen. Für Polyethylenterephthalate mit erhöhtem Comonomeranteil reduziert sich der Schmelzpunkt entsprechend der im Stand der Technik bekannten Zusammenhänge. Die vom Comonomergehalt abhängige Schmelztemperatur eines Standard-Polyethylenterephthalates wird zum Beispiel in EP 0532 988, Thiele beschrieben.

Die Schmelzenthalpie entspricht der Fläche zwischen der Basislinie und dem Schmelzpeak, begrenzt durch die linke und rechte Grenze des Peaks, wobei ein Doppelpeak oder Seitenpeak mit berücksichtigt wird. Die Schmelzenthalphie im ersten Run eines Polyethylenterephthalat Homopolymers soll zum Beispiel unter 75 J/g, insbesondere unter 70 J/g liegen. Für Polyethylenterephthalate mit erhöhtem Comonomeranteil reduziert sich die Schmelzenthalphie entsprechend der im Stand der Technik bekannten Zusammenhänge.

Wird die Entwicklung der Polyesterendgruppen vor und nach der Festphasen-Polykondensation gemessen, so lässt sich die Anzahl an Veresterungsreaktionen (E) und an Transesterifikationsreaktionen (T) pro Tonne Material bestimmen.

$$E = c_{COOH} \text{ Start} - c_{COOH} \text{ Ende}$$

$$T = (c_{OH} \text{ Start} - c_{OH} \text{ Ende} - E) / 2$$

Aufgrund der resultierenden Anteile wird ersichtlich, ob die Reaktion mehrheitlich über eine Veresterungsreaktion E/(E+T)) > 0.5 oder mehrheitlich über eine Transesterifikationsreaktion

E/(E+T)) < 0.5 abläuft, wobei die Reaktion erfindungsgemäss zu mehr als 50%, insbesondere zu mehr als 65% und besonders bevorzugt zu mehr als 80% über eine Veresterungsreaktion ablaufen soll.

Die thermisch Behandlung in der Festphasen-Polykondensation soll im wesentlichen in einer inerten Atmosphäre, insbesondere unter Zugabe eines Inertgasstroms erfolgen. Als Inertgase kommen zum Beispiel Stickstoff, CO2 oder Edelgase, sowie Gemische aus Prozessgasen in Frage.

Bevorzugterweise wird das Prozessgas zumindest teilweise in einem Kreislauf geführt. Um eine Beeinträchtigung der Polykondensationsreaktion zu vermindern, soll das Prozessgas von unerwünschten Produkten, insbesondere Spaltprodukten der Polykondensationsreaktionen, wie Wasser, Ethylenglykol oder kurzkettigen Aldehyden (z.B. Acetaldehyd) gereinigt werden. Die Reinigung kann durch im Stand der Technik bekannte Gasreinigungssysteme, wie z.B. katalytische Verbrennungssysteme, Gaswäscher, Adsorptionssysteme oder Kühlfallen erfolgen.

Erfindungsgemäss soll die Steuerung der Polykondensationsreaktionen nicht durch die Zugabe niedermolekularer Spaltprodukte der Polykondensationsreaktionen erfolgen.

Dementsprechend soll die Wasser-Konzentration im Inertgas so gering gehalten werden, dass die Veresterungsreaktion nicht wesentlich behindert ist. Bevorzugterweise liegt die Wasserkonzentration im Polyester bei der Zufuhr des Inertgases unter 50%, insbesondere unter 30% der Konzentration, die aus den Endgruppen des Polyesters bei dessen Endmolekulargewicht theoretisch gebildet werden kann.

Ebenso soll die Konzentration der niedermolekularen Alkandiol-Spaltprodukte der Polykondensationsreaktion im Inertgas so gering gehalten werden, dass die Transesterifikationsreaktion nicht wesentlich behindert ist. Bevorzugterweise liegt die Alkandiol-Konzentration im Polyester bei der Zufuhr des Inertgases unter 30% insbesondere unter 10% der Konzentration, die aus den Endgruppen des Polyesters bei dessen Endmolekulargewicht theoretisch gebildet werden kann.

Die theoretische Wasser-Konzentration, die aus den Endgruppen des Polyesters bei dessen Endmolekulargewicht theoretisch gebildet werden kann, ergibt sich aus der Carboxylendgruppenkonzentration am Ende der Festphasenpolykondensation ($c_{COOH}$ Ende)

$$c_{H2O} \text{ th} = c_{COOH} \text{ Ende,} \qquad \text{wenn } c_{COOH} \text{ Ende} <= c_{OH} \text{ Ende}$$

Liegt ein Carboxylendgruppenüberschuss vor, ergibt sich die theoretische Wasser-Konzentration, die aus den Endgruppen des Polyesters bei dessen Endmolekulargewicht theoretisch gebildet werden kann, aus der Hydroxylendgruppenkonzentration am Ende der Festphasenpolykondensation ($c_{OH}$ Ende)

$$c_{H2O} \text{ th} = c_{OH} \text{ Ende, wenn } c_{COOH} \text{ End} > c_{OH} \text{ Ende}$$

Die Konzentration des Wassers, das mit dem Inertgas von aussen zugeführt wird, bezogen auf den Polyester, ergibt sich aus der zugeführten Wassermenge pro Zeiteinheit $m^\circ_{H2O}$ und der zu bearbeitenden Polyestermenge pro Zeiteinheit $m^\circ_{PET}$., wobei eine Division durch das Molekulargewicht des Wassers erfolgen muss, um als Einheit ebenfalls mol/t zu erhalten.

$$c_{H2O} = m^\circ_{H2O} / m^\circ_{PET} / Mw_{H2O}$$

Die theoretische Alkan-Diol-Konzentration, die aus den Endgruppen des Polyesters bei dessen Endmolekulargewicht theoretisch gebildet werden kann, ergibt sich aus der Hydroxylendgruppenkonzentration am Ende der Festphasenpolykondensation ($c_{OH}$ Ende)

$$c_{AD} \text{ th} = c_{OH} \text{ Ende} / 2$$

Die Konzentration des Alkandiols, das mit dem Inertgas von aussen zugeführt wird, bezogen auf den Polyester, ergibt sich aus der zugeführten Alkandiolmenge pro Zeiteinheit $m^\circ_{AD}$ und der zu bearbeitenden Polyestermenge pro Zeiteinheit $m^\circ_{PET}$, wobei eine Division durch das Molekulargewicht des Alkandiols erfolgen muss, um als Einheit ebenfalls mol/t zu erhalten.

$$c_{AD} = m^\circ_{AD} / Mw_{AD} / m^\circ_{PET}$$

Sämtliche Konzentrationen ergeben sich dabei in mol/t.

Bei der Herstellung von Polyethylenterephthalat das auf ein Molekulargewicht von 20'000 g/mol bis 28'000 g/mol Polykondensiert werden soll, liegt die bevorzugte Prozessgaszusammensetzung beim Eintritt in den Polykondensationsreaktor bei einem $H_2O$-Gehalt von weniger als 300 ppm (w), insbesondere weniger als 100 ppm (w) und bei einem EG-Gehalt von weniger als 300 ppm (w) insbesondere weniger als 100 ppm (w), wenn mit einem Gasmengen zu Produktmengenverhältnis von kleiner 1 gearbeitet wird.

Beispiel 1

Eine Polyethylenterephthalat Homopolymerschmelze, dessen Diol-Komponente zu mehr als 97mol % aus Ethandiol und dessen Dicarbonsäure-Komponente zu mehr als 99% aus Terephthalsäure besteht, mit einem Katalysatorgehalt von 480ppm Antimon wurde zu Granulaten mit kugelähnlicher Form geformt, verfestigt und abgekühlt.

Die Granulate hatten einen mittleren Durchmesser zwischen 2 und 3mm.

Das Molekulargewicht betrug Mn = 4715 g/mol. Das Produkt hatte einen Carboxylendgruppenkonzentration von 166 mol/t und somit ein einen Carboxylendgruppengehalt von 0.39.

Die Granulate wurden in einem Fliessbettreaktor zunächst während 20Minuten bei 140°C kristallisiert und dann während 28.5h bei 225°C in einem katalytisch gereinigten Stickstoffstrom mit einem Taupunkt von unter -40°C behandelt.

Das behandelte Produkt hat ein Molekulargewicht Mn = 22'675 g/mol und eine Carboxylendgruppenkonzentration von 72 mol/t.

Die Polykondensationsreaktion ist somit zu 55.8% über eine Veresterung abgelaufen.

Der DSC Schmelzpunkt, gemessen bei 10°/min Aufheizrate beträgt 259.4°C; die Schmelzwärme 68.7J/g.

Vergleichsbeispiel 1

Beispiel 1 wurde wiederholt, jedoch mit einem Ausgangsprodukten mit geringerem Carboxylendgruppengehalt von 0.29.

Die Polykondensationsreaktion ist dabei nur zu 44.5% über eine Veresterung abgelaufen.

Der DSC Schmelzpunkt, gemessen bei 10°/min Aufheizrate beträgt 264.1°C; die Schmelzwärme 69.5J/g.

Die Ergebnisse sind in Tabelle 1 zusammengefasst

Tabelle 1

|  | Bsp 1 | VBsp1 |
|---|---|---|
| Mn Start [g/mol] | 4715 | 4795 |
| EGN | 424 | 417 |
| $c_{COOH}$ Start [mol/t] | 166 | 121 |
| % COOH Start | 39.1 | 29.0 |
| T/t SSP [°C/h] | 225 / 28.5 | 225 / 24.5 |
| Mn End [g/mol] | 22675 | 23810 |
| $c_{COOH}$ End [mol/t] | 72.2 | 46.9 |
| Anteil Veresterung (E/(E+T)) | 55.8% | 44.5% |
| DSC Schmelzpunkt [°C] | 259.4 | 264.1 |
| DSC Schmelzenthalphie [J/g] | 68.7 | 69.5 |
| DSC 2. Run Kristallisationspeak [°C] | 172.5 | 169.0 |
| DSC 2. Run Schmelzpunkt [°C] | 255.3 | 254.4 |

Beispiel 2

Eine Polyethylenterephthalat Homopolymerschmelze dessen Diol-Komponente zu mehr als 97mol % aus Ethandiol und dessen Dicarbonsäure-Komponente zu mehr als 99% aus Terephthalsäure besteht, mit einem Katalysatorgehalt von 480ppm Antimon wurde zu Granulaten mit kugelähnlicher Form geformt, verfestigt und abgekühlt.

Die Granulate hatten einen mittleren Durchmesser zwischen 0.8 und 1mm.

Das Molekulargewicht betrug Mn = 4955 g/mol. Das Produkt hatte eine Carboxylendgruppenkonzentration von 161 mol/t und somit einem Carboxylendgruppengehalt von 0.40.

Die Granulate wurden in einem Festbettreaktor zunächst währen 30 Minuten bei 140°C Kristallisiert und dann während 28h bei 215°C in reinem Stickstoffstrom mit Taupunkt <-60°C behandelt.

Das behandelte Produkt hat ein Molekulargewicht Mn = 17'832 g/mol und eine Carboxylendgruppenkonzentration von 42 mol/t.

Die Polykondensationsreaktion ist somit zu 85% über eine Veresterung abgelaufen.

Der DSC Schmelzpunkt, gemessen bei 10°/min Aufheizrate beträgt 253.2°C; die Schmelzwärme 70.2J/g.

Beispiel 3

Beispiel 2 wurde wiederholt, jedoch mit Ausgangsprodukt mit einem geringeren Carboxylendgruppengehalt von 0.29. Die Ergebnisse sind in Tabelle 2 dargestellt.

Vergleichsbeispiel 2

Beispiel 2 wurde wiederholt, jedoch mit Ausgangsprodukt mit einem geringeren Carboxylendgruppengehalt von 0.08. Die Ergebnisse sind in Tabelle 2 dargestellt.

Tabelle 2

|  | Bsp 2 | Bsp 3 | VBsp 2 |
|---|---|---|---|
| Mn Start [g/mol] | 4955 | 4795 | 3245 |
| EGN | 404 | 417 | 616 |
| cCOOH Start [mol/t] | 161 | 121 | 46.2 |
| % COOH Start | 39.9 | 29.0 | 7.5 |
| T/tSSP [°C/h] | 215 / 28 | 215/28 | 215 / 28 |
| Mn End [g/mol] | 17832 | 19023 | 12548 |
| cCOOH End [mol/t] | 42.1 | 26.4 | 14.1 |
| Anteil Veresterung (E/(E+T)) | 85% | 60.6% | 14% |
| DSC Schmelzpunkt [°C] | 253.2 | 254.6 | 257.1 |
| DSC Schmelzenthalphie [J/g] | 70.2 | 72.8 | 76.1 |
| DSC 2. Run Kristallisationspeak [°C] | 164.2 | 159.2 | 149.9 |

**Patentansprüche**

1. Verfahren zur Herstellung eines Polyesters mit verbesserten Aufschmelzeigenschaften und Kristallisationseigenschaften umfassend die Schritte:

 a. Herstellen einer Pre-Polyesterschmelze mit einem mittleren Molekulargewicht (Mn) von 2000 bis 16000 g/mol, wobei das mittlere Molekulargewicht (Mn) durch Messung der relativen Viskosität (R.V.) bei 25°C mit einem Ubbelohde-Viskosimeter (nach DIN Anweisung Nr. 53728, Teil 3 vom Januar 1985) in einer Mischung aus Phenol/Dichlorbenzol (50:50 Gew.%) als Lösungsmittel, Umrechnung der gemessenen relativen Viskosität (R.V.) in die intrinsische Viskosität (I.V.) gemäss der Gleichung

$$I.V. = \frac{\sqrt{1 \div 4K_H(R.V. - 1)} - 1}{2 * c * K_H}$$

 wobei c die Polymerkonzentration in der Probe, $K_H$ die Huggins Konstante ($K_H$=0.35) ist, und Umrechnung der intrinsischen Viskosität (I.V.) in das mittlere Molekulargewicht (Mn) gemäss der Gleichung

$$IV = k \cdot Mn^a$$

 wobei k=2.1·10⁻⁴ und a=0.82 ist, erhalten werden kann,
 b. Verfestigen und Formen zu Pre-Polyesterpartikeln,
 c. thermisches Behandeln der Pre-Polyesterpartikel in der festen Phase, in Gegenwart eines Transesterifikationskatalysators, wobei ein Molekulargewichtsanstieg (delta Mn) von mehr als 2000 g/mol erfolgt,

 **dadurch gekennzeichnet, dass** die Pre-Polyesterpartikel vor Schritt c. einen Carboxylendgruppengehalt ($X_{COOH}$) zwischen 0.25 und 0.6 aufweisen, wobei der Carboxylendgruppengehalt ($X_{COOH}$) aus dem mittleren Molekulargewicht Mn gemäss den Gleichungen
 $EGN = 2 \cdot 10^6 / Mn$
 $X_{COOH} = C_{COOH}/EGN$
 berechnet werden kann,
 und dass während der thermischen Behandlung im Schritt c. der Anteil der Veresterungsreaktion (E) an den Polykondensationsreaktionen (E+T) zwischen 0.5 und 1 liegt.

2. Verfahren nach Anspruch 1, **dadurch gekennzeichnet, dass** im Schritt a. eine Pre-Polyesterschmelze mit einem mittleren Molekulargewicht (Mn) von mehr als 4000 g/mol insbesondere von mehr als 7000 g/mol hergestellt wird.

3. Verfahren nach mindestens einem der vorhergehenden Ansprüche, **dadurch gekennzeichnet, dass** im Schritt a. eine Pre-Polyesterschmelze mit einem mittleren Molekulargewicht (Mn) von weniger als 14000 g/mol, insbesondere von weniger als 9'900 g/mol hergestellt wird.

4. Verfahren nach mindestens einem der vorhergehenden Ansprüche, **dadurch gekennzeichnet, dass** im Schritt c. ein Molekulargewichtsanstieg (delta Mn) von mehr als 4000 g/mol erfolgt.

5. Verfahren nach mindestens einem der vorhergehenden Ansprüche, **dadurch gekennzeichnet, dass** im Schritt c. ein Molekulargewichtsanstieg auf einen Wert (Mn) zwischen 16'000 und 34'000 g/mol, insbesondere auf einen Wert zwischen 20'000 und 28'000 g/mol erfolgt.

6. Verfahren nach mindestens einem der vorhergehenden Ansprüche, **dadurch gekennzeichnet, dass** die Pre-Polyesterpartikel vor Schritt c. einen Carboxylendgruppengehalt ($X_{COOH}$) zwischen 0.30 und 0.55 aufweisen.

7. Verfahren nach mindestens einem der vorhergehenden Ansprüche, **dadurch gekennzeichnet, dass** die Pre-Polyesterpartikel vor Schritt c. einen Carboxylendgruppengehalt ($X_{COOH}$) grösser als 0.35, insbesondere grösser als 0.40 aufweisen.

8. Verfahren nach mindestens einem der vorhergehenden Ansprüche, **dadurch gekennzeichnet, dass** während der thermischen Behandlung im Schritt c. der Anteil der Veresterungsreaktion (E) an den Polykondensationsreaktionen (E+T) bei mehr als 0.65, insbesondere mehr als 0.8 liegt.

9. Verfahren nach mindestens einem der vorhergehenden Ansprüche, **dadurch gekennzeichnet, dass** es sich beim Transesterifikationskatalysator um eine oder mehrere Substanzen basierend auf metallischen Elementen, wie zum Beispiel Antimon, Germanium, Aluminium oder Titan, handelt und der Gehalt des metallischen Elementes im Polyester zwischen 5 und 400 ppm liegt, wobei ein Antimongehalt zwischen 20 und 300ppm, ein Germaniumgehalt zwischen 10 und 150ppm, ein Aluminiumgehalt zwischen 10 und 200ppm oder ein Titangehalt zwischen 5 und 20ppm bevorzugt wird.

10. Verfahren nach mindestens einem der vorhergehenden Ansprüche, **dadurch gekennzeichnet, dass** die Partikel Granulate mit definierter Form, wie zum Beispiel kugelförmig, kugelähnlich, zylinderförmig usw. sind.

11. Verfahren nach mindestens einem der vorhergehenden Ansprüche, **dadurch gekennzeichnet, dass** es sich bei dem Polyester um ein Polyethylenterephthalat oder eines seiner Copolymere handelt.

12. Verfahren nach Anspruch 11 **dadurch gekennzeichnet, dass** die thermisch Behandlung im Schritt c. im wesentlichen bei einer Temperatur im Bereich 180°C bis 230°C, insbesondere zwischen 190 und 220°C erfolgt.

13. Verfahren nach einem der Ansprüche 11 bis 12 **dadurch gekennzeichnet, dass** zu Beginn der thermischen Behandlung ein Aufheizen auf eine erhöhte Temperatur zwischen 220°C und dem Schmelzpunkt des Polyesters, insbesondere zwischen 230°C und 245°C erfolgt, wobei die Verweilzeit in diesem erhöhten Temperaturbereich maximal 2 Stunden, insbesondere maximal 30 Minuten beträgt.

14. Verfahren nach mindestens einem der vorhergehenden Ansprüche, **dadurch gekennzeichnet, dass** die thermisch Behandlung im Schritt c. in einer inerten Atmosphäre, insbesondere unter Zugabe eines Inertgasstroms erfolgt.

15. Verfahren nach mindestens einem der vorhergehenden Ansprüche, **dadurch gekennzeichnet, dass** die Wasser-Konzentration im Inertgas so gering gehalten wird, dass deren Konzentration im Polyester bei der Zufuhr des Inertgases unter 50%, insbesondere unter 30% der Konzentration liegt, die aus den Endgruppen des Polyesters bei dessen Endmolekulargewicht theoretisch gebildet werden kann.

16. Verfahren nach mindestens einem der vorhergehenden Ansprüche, **dadurch gekennzeichnet, dass** die Konzentration der niedermolekularen Alkandiol-Spaltprodukte der Polykondensationsreaktion im Inertgas so gering gehalten wird, dass deren Konzentration im Polyester bei der Zufuhr des Inertgases unter 30% insbesondere unter 10% der Konzentration liegt, die aus den Endgruppen des Polyesters bei dessen Endmolekulargewicht theoretisch gebildet werden kann.

**17.** Verfahren nach mindestens einem der vorhergehenden Ansprüche, **dadurch gekennzeichnet, dass** ein Veresterungskatalysator zur Beschleunigung der Veresterungsreaktion, wie zum Beispiel eine metallische Verbindung basierend auf Mangan, Kobalt, Zink oder Kalzium zugegeben wird.

**18.** Verfahren nach mindestens einem der vorhergehenden Ansprüche, **dadurch gekennzeichnet, dass** DSC Schmelzenthalphie des Polyesters unter 75 J/g liegt.

**19.** Verfahren nach mindestens einem der vorhergehenden Ansprüche, **dadurch gekennzeichnet, dass** DSC Kristallisationspeak-Temperatur im zweiten Run des Polyesters über 155°C liegt.

**20.** Verfahren nach mindestens einem der vorhergehenden Ansprüche, **dadurch gekennzeichnet, dass** dessen DSC Kristallisationspeak-Temperatur im zweiten Run über 155°C liegt.

**21.** Verfahren nach mindestens einem der vorhergehenden Ansprüche **dadurch gekennzeichnet, dass** dessen DSC Schmelzenthalphie unter 75 J/g liegt.

**Claims**

**1.** A method for manufacturing polyester with improved melting properties and crystallization properties, comprising the steps of:

a. manufacturing a pre-polyester melt with an average molecular weight (Mn) of 2000 to 16000 g/mol, wherein the average molecular weight (Mn) can be obtained by measuring the relative viscosity (R.V.) at 25°c with a Ubbelohde viscometer (per DIN Instruction No. 53728, Part 3, January 1985), in a mixture of phenol/dichlorobenzene (50:50% w/w) as the solvent, calculating from the measured relative viscosity (R.V.) the intrinsic viscosity (I.V.) according to the equation

$$I.V = \frac{\sqrt{1 + 4K_H(R.V. - 1)} - 1}{2 \cdot c \cdot K_H}$$

wherein c is the polymer concentration in the sample, $K_H$ is the Huggins constant ($K_H = 0.35$), and calculating from the intrinsic viscosity (I.V.) the average molecular weight (Mn) according to the equation

$$IV = k \cdot Mn^a$$

wherein $k = 2.1 \cdot 10^{-4}$ and $a = 0.82$,
b. solidifying and shaping into pre-polyester particles,
c. thermally treating the pre-polyester particles in the solid phase in the presence of a transesterification catalyst, wherein a molecular weight increase ([Delta]Mn) of more than 2000 g/mol takes place,

**characterized in that** the pre-polyester particles exhibit a carboxyl end group content ($X_{COOH}$) of between 0.25 and 0.6 before step c, wherein the carboxyl end group content ($X_{COOH}$) can be calculated from the average molecular weight Mn according to the formulas
$EGN = 2 \cdot 10^6 / Mn$

$$X_{COOH} = C_{COOH} / EGN,$$

and that the esterification reaction (E) makes up between 0.5 and 1 of the polycondensation reaction (E+T) during treatment in step c.

**2.** The method according to claim 1, **characterized in that** a pre-polyester melt with an average molecular weight (Mn) of more than 4000 g/mol, in particular more than 7000 g/mol, is manufactured in step a.

3. The method according to at least one of the above claims, **characterized in that** a pre-polyester melt with an average molecular weight (Mn) of less than 14000 g/mol, in particular less than 9900 g/mol, is manufactured in step a.

4. The method according to at least one of the above claims, **characterized in that** a molecular weight increase (Delta Mn) of more than 4000 g/mol takes place in step c.

5. The method according to at least one of the above claims, **characterized in that** a molecular weight increase to a value (Mn) of between 16000 and 34000 g/mol, in particular to a value (Mn) of between 20000 and 28000 g/mol, takes place in step c.

6. The method according to at least one of the above claims, **characterized in that** the pre-polyester particles exhibit a carboxyl end group content (XCOOH) of between 0.30 and 0.55 before step c.

7. The method according to at least one of the above claims, **characterized in that** the pre-polyester particles exhibit a carboxyl end group content (XCOOH) of greater than 0.35, in particular greater than 0,40, before step c.

8. The method according to at least one of the above claims, **characterized in that** the esterification reaction (E) makes up more than 0.65, in particular more than 0,80, of the polycondensation reaction (E+T) during thermal treatment in step c.

9. The method according to at least one of the above claims, **characterized in that** the transesterification catalyst is one or more substances based on metal elements, such as antimony, germanium, aluminum and titanium, and the content of the metal element in the polyester ranges between 5 and 400 ppm, wherein an antimony content between 20 and 300 ppm, a germanium content between 10 and 150 ppm, a aluminum content between 10 and 200 ppm or a titanium content between 5 and 20 ppm is preferred.

10. The method according to at least one of the above claims, **characterized in that** the particles are granulates having a defined shape, for example spherical shape, spherical-like shape, cylindrical shape or the like.

11. The method according to at least one of the above claims, **characterized in that** the polyester is a polyethylene terephthalate or one of its copolymers.

12. The method according to claim 11, **characterized in that** the thermal treatment in step c. essentially takes place at a temperature in the range from 180°C to 230°C, in particular in the range from 190°C to 220°C.

13. The method according to any of claims 11 or 12, **characterized in that** heating to an elevated temperature of between 220 °C and the melting point of the polyester, in particular between 230°C and 245°C, takes place at the beginning of thermal treatment, wherein the retention time in this elevated temperature range measures at most 2 hours, in particular at most 30 minutes.

14. The method according to at least one of the above claims, **characterized in that** the thermal treatment in step c. takes place in an inert gas atmosphere, in particular by adding an inert gas stream.

15. The method according to at least one of the above claims, **characterized in that** the water concentration in the inert gas is held so low that its concentration in the polyester while supplying the inert gas lies below 50%, in particular below 30% of the concentration that can theoretically be formed from the end groups of the polyester at its end molecular weight.

16. The method according to at least one of the above claims, **characterized in that** the concentration of low-molecular alkane diol decomposition products from the polycondensation reaction in the inert gas is held so low that its concentration in the polyester while supplying the inert gas lies below 30%, in particular below 10% of the concentration that can theoretically be formed from the end groups of the polyester at its end molecular weight.

17. The method according to at least one of the above claims, **characterized in that** an esterification catalyst is added for accelerating the esterification reaction, such as for example a metal compound based on manganese, cobalt, zinc or calicum.

18. The method according to at least one of the above claims, **characterized in that** the DSC melting enthalpy of the polyester lies below 75 J/g.

19. The method according to at least one of the above claims, **characterized in that** the DSC crystallization peak temperature in a second run of the polyester exceeds 155 °C.

20. The method according to at least one of the above claims, **characterized in that** the DSC crystallization peak temperature in a second run exceeds 155 °C.

21. The method according to at least one of the above claims, **characterized in that** the DSC melting enthalpy lies below 75 J/g.

**Revendications**

1. Procédé pour la préparation d'un polyester présentant des propriétés de fusion et des propriétés de cristallisation améliorées, comprenant les étapes consistant à :

   a. préparer une masse fondue d'un prépolyester présentant un poids moléculaire moyen (Mn) de 2000 à 16.000 g/mole, le poids moléculaire moyen (Mn) pouvant être obtenu par mesure de la viscosité relative (R.V.) à 25°C à l'aide d'un viscosimètre d'Ubbelohde (selon la norme DIN 53728, partie 3 de janvier 1985) dans un mélange de phénol/dichlorobenzène (50:50 % en poids) comme solvant, transformation par calcul de la viscosité relative (R.V.) mesurée en viscosité intrinsèque (I.V.) selon l'équation

$$I.V = \frac{\sqrt{1 + 4K_H(R.V. - 1)} - 1}{2 \cdot c \cdot K_H}$$

   c étant la concentration en polymère dans l'échantillon, $K_H$ étant la constante de Huggins ($K_H$=0,35), et transformation par calcul de la viscosité intrinsèque (I.V.) en poids moléculaire moyen (Mn) selon l'équation

$$IV = k \cdot Mn^a$$

   dans laquelle k=2,1.10$^{-4}$ et a=0,82,
   b. solidifier et façonner en particules de prépolyester,
   c. traiter thermiquement les particules de prépolyester en phase solide, en présence d'un catalyseur de transestérification, une augmentation du poids moléculaire (delta Mn) de plus de 2000 g/mole étant obtenue,

   **caractérisé en ce que** les particules de prépolyester présentent, avant l'étape c., une teneur en groupes terminaux carboxyle ($X_{COOH}$) entre 0,25 et 0,6, la teneur en groupes terminaux carboxyle ($X_{COOH}$) pouvant être calculée à partir du poids moléculaire moyen Mn selon les équations

$$EGN \ (concentration \ en \ groupes \ terminaux) = 2.10^6/Mn$$
$$X_{COOH} = C_{COOH}/EGN$$

   et **en ce que**, pendant le traitement thermique dans l'étape c., la proportion de la réaction d'estérification (E) par rapport aux réactions de polycondensation (E+T) est située entre 0,5 et 1.

2. Procédé selon la revendication 1, **caractérisé en ce qu'**on prépare, dans l'étape a., une masse fondue de prépolyester présentant un poids moléculaire moyen (Mn) supérieur à 4000 g/mole, en particulier supérieur à 7000 g/mole.

3. Procédé selon au moins l'une quelconque des revendications précédentes, **caractérisé en ce qu'**on prépare, dans l'étape a., une masse fondue de prépolyester présentant un poids moléculaire moyen (Mn) inférieur à 14.000 g/mole, en particulier inférieur à 9900 g/mole.

**4.** Procédé selon au moins l'une quelconque des revendications précédentes, **caractérisé en ce qu'**il se produit, dans l'étape c., une augmentation du poids moléculaire (delta Mn) de plus de 4000 g/mole.

**5.** Procédé selon au moins l'une quelconque des revendications précédentes, **caractérisé en ce qu'**il se produit, dans l'étape c., une augmentation du poids moléculaire à une valeur (Mn) entre 16.000 et 34.000 g/mole, en particulier à une valeur entre 20.000 et 28.000 g/mole.

**6.** Procédé selon au moins l'une quelconque des revendications précédentes, **caractérisé en ce que** les particules de prépolyester présentent, avant l'étape c., une teneur en groupes terminaux carboxyle ($X_{COOH}$) entre 0,30 et 0,55.

**7.** Procédé selon au moins l'une quelconque des revendications précédentes, **caractérisé en ce que** les particules de prépolyester présentent, avant l'étape c., une teneur en groupes terminaux carboxyle ($X_{COOH}$) supérieure à 0,35, en particulier supérieure à 0,40.

**8.** Procédé selon au moins l'une quelconque des revendications précédentes, caractérisé et en ce que, pendant le traitement thermique dans l'étape c., la proportion de la réaction d'estérification (E) par rapport aux réactions de polycondensation (E+T) est supérieure à 0,65, en particulier supérieure à 0,8.

**9.** Procédé selon au moins l'une quelconque des revendications précédentes, **caractérisé en ce qu'**il s'agit, pour le catalyseur de transestérification, d'une ou de plusieurs substances à base d'éléments métalliques, tels que par exemple l'antimoine, le germanium, l'aluminium ou le titane et la teneur en élément métallique dans le polyester est située entre 5 à 400 ppm, une teneur en antimoine entre 20 et 300 ppm, une teneur en germanium entre 10 et 150 ppm, une teneur en aluminium entre 10 et 200 ppm ou une teneur en titane entre 5 et 20 ppm étant préférées.

**10.** Procédé selon au moins l'une quelconque des revendications précédentes, **caractérisé en ce que** les particules sont des granulats présentant une forme définie, comme par exemple une forme sphérique, quasisphérique, cylindrique, etc.

**11.** Procédé selon au moins l'une quelconque des revendications précédentes, **caractérisé en ce qu'**il s'agit, pour le polyester, d'un poly(téréphtalate d'éthylène) ou d'un de ses copolymères.

**12.** Procédé selon la revendication 11, **caractérisé en ce que** le traitement thermique dans l'étape c. a essentiellement lieu à une température dans la plage de 180°C à 230°C, en particulier entre 190 et 220°C.

**13.** Procédé selon l'une quelconque des revendications 11 à 12, **caractérisé en ce que**, au début du traitement thermique, un chauffage à une température augmentée entre 220°C et le point de fusion du polyester, en particulier entre 230°C et 245°C, a lieu, le temps de séjour dans cette plage de température élevée étant d'au maximum 2 heures, en particulier d'au maximum 30 minutes.

**14.** Procédé selon au moins l'une quelconque des revendications précédentes, **caractérisé en ce que** le traitement thermique dans l'étape c. a lieu dans une atmosphère inerte, en particulier avec addition d'un flux de gaz inerte.

**15.** Procédé selon au moins l'une quelconque des revendications précédentes, **caractérisé en ce que** la concentration en eau dans le gaz inerte est maintenue tellement basse que sa concentration dans le polyester lors de l'alimentation en gaz inerte est inférieure à 50%, en particulier inférieure à 30% de la concentration qui peut être formée théoriquement à partir des groupes terminaux du polyester à son poids moléculaire final.

**16.** Procédé selon au moins l'une quelconque des revendications précédentes, **caractérisé en ce que** la concentration en produits de dissociation d'alcanediol de bas poids moléculaire de la réaction de polycondensation dans le gaz inerte est maintenue tellement basse que sa concentration dans le polyester lors de l'alimentation en gaz inerte est inférieure à 30%, en particulier inférieure à 10% de la concentration qui peut être formée théoriquement à partir des groupes terminaux du polyester à son poids moléculaire final.

**17.** Procédé selon au moins l'une quelconque des revendications précédentes, **caractérisé en ce qu'**un catalyseur d'estérification pour accélérer la réaction d'estérification, tel que par exemple un composé métallique à base de manganèse, de cobalt, de zinc ou de calcium, est ajouté.

**18.** Procédé selon au moins l'une quelconque des revendications précédentes, **caractérisé en ce que** l'enthalpie de fusion par DSC (differential scanning calorimetry - calorimétrie différentielle à balayage) du polyester est inférieure à 75 J/g.

19. Procédé selon au moins l'une quelconque des revendications précédentes, **caractérisé en ce que** la température du pic de cristallisation par DSC, lors du deuxième cycle du polyester, est supérieure 155°C.

20. Procédé selon au moins l'une quelconque des revendications précédentes, **caractérisé en ce que** sa température du pic de cristallisation par DSC, lors du deuxième cycle, est supérieure 155°C.

21. Procédé selon au moins l'une quelconque des revendications précédentes, **caractérisé en ce que** son enthalpie de fusion par DSC est inférieure à 75 J/g.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4205157 A
- DE 19519898
- CH 2005000035 W
- WO 04055093 A
- EP 0541674 A
- WO 02068498 A
- EP 0532988 A

**In der Beschreibung aufgeführte Nicht-Patentliteratur**

- Modern Polyesters. Polymer Science. J. Wiley & Sons Ltd, 2003
- Modern Polyesters. Modern Polyesters. Wiley Series
- Polymer Science. J. Wiley & Sons Ltd, 2003